**Europäisches Patentamt**

**European Patent Office**

**Office européen des brevets**

(19)

(11) Numéro de publication : **0 102 864**
**B1**

(12) **FASCICULE DE BREVET EUROPÉEN**

(45) Date de publication du fascicule du brevet : **28.06.89**

(21) Numéro de dépôt : **83401498.7**

(22) Date de dépôt : **21.07.83**

(51) Int. Cl.⁴ : **B 23 D 21/08**

(54) **Coupe-tubes à molettes et à arcades.**

(30) Priorité : **26.07.82 FR 8212979**

(43) Date de publication de la demande : **14.03.84 Bulletin 84/11**

(45) Mention de la délivrance du brevet : **28.06.89 Bulletin 89/26**

(84) Etats contractants désignés : **AT DE FR GB IT**

(56) Documents cités :
**FR—A— 2 208 749**
**US—A— 1 507 969**
**US—A— 2 459 101**
**US—A— 2 782 500**
**US—A— 3 715 804**

(73) Titulaire : **VIRAX S.A.**
**39/41 Quai de Marne B.P. 197**
**F-51206 Epernay Cédex (FR)**

(72) Inventeur : **Aubriot, Claude**
**33, Rue de Tarbes Damery**
**F-51200 Epernay (FR)**

(74) Mandataire : **de Boisse, Louis Arnaud**
**CABINET de BOISSE 37, Avenue Franklin D. Roosevelt**
**F-75008 Paris (FR)**

## Description

La présente invention concerne un coupe-tubes de chantier à molettes et à arcades permettant de tronçonner manuellement des tuyauteries rigides de grand diamètre. Les coupe-tubes connus de ce genre sont destinés au tronçonnage de canalisations en fonte disposées horizontalement dans une tranchée. Il s'agit généralement de coupe-tubes à arcades ou à mailles que l'on vient tout d'abord placer et refermer autour de la tuyauterie à couper et que l'on manoeuvre ensuite en rotation, en rapprochant progressivement les molettes de coupe de l'axe du tube au fur et à mesure de leur pénétration, jusqu'à ce que la séparation soit obtenue.

Les coupe-tubes de faible capacité sont conçus pour être actionnés en va-et-vient selon un angle suffisant pour obtenir un minimum de recouvrement des traces des molettes.

La coupe des tubes de grand diamètre est réservée à des coupe-tubes à arcades utilisés en rotation et non plus en va-et-vient. Pour cela les arcades sont munies à leur périphérie de doigts ou d'orifices disposés régulièrement de façon à permettre l'entraînement en rotation du coupe-tubes par l'intermédiaire d'un levier. De tels dispositifs sont décrits dans la demande de brevet français publiée sous le n° 2 459 101 et dans les brevets américains US 2 300 139, 2 796 663, 3 249 998 et 3 290 779.

Si les tranchées dans le fond desquelles reposent les canalisations sont généralement suffisamment larges pour permettre la libre rotation des arcades du coupe-tubes et des doigts d'entraînement qui les équipent, il n'en est pas de même pour le débattement du levier qui doit permettre une rotation de 45 à 60° pour un coupe-tubes à arcades et de 360° divisé par le nombre de molettes pour un coupe-tubes à chaînes. Le couple à développer pour entraîner le coupe-tubes et obtenir la coupe est très important, ce qui oblige à utiliser un levier de manoeuvre très long et par conséquent à accroître la largeur de la tranchée pour permettre son libre débattement qui dépend de l'écartement angulaire des doigts ou des orifices d'entraînement.

Il existe déjà un coupe-tubes à arcades et à cliquet équipé d'une roue à rochet monobloc, dont le débattement angulaire est très faible. Mais la réalisation de ce système est assez complexe et très encombrante ; ce qui se répercute sur le poids et sur le prix.

Le coupe-tubes à arcades objet de l'invention, qui combine le système à orifices ou doigts d'entraînement et celui à cliquets, permet d'éliminer ces inconvénients. Avec celui-ci le débattement angulaire minimum du levier d'entraînement n'est que de 10 à 15° ; ce qui permet une application plus aisée de l'effort de coupe maximum ainsi que la mise en oeuvre dans des tranchées très étroites. De plus il peut être utilisé sur toute une gamme de tubes de diamètres différents et non pas être réservé à un seul diamètre comme c'est actuellement le cas avec la plupart des coupe-tubes.

Ce coupe-tubes se caractérise en ce que l'entraînement en rotation est effectué au moyen d'un levier dont l'accrochage sur les arcades est assuré par l'engrènement de cliquets, prévus sur le levier, avec des rochets disposés à la périphérie des arcades et par l'engrènement de fourches, prévues aux extrémités de la chape du levier, avec des bossages des arcades dans lesquels sont montés les axes des molettes.

Les cliquets qui équipent la chape du levier sont réalisés en deux parties disposées à l'intérieur de ladite chape de part et d'autre du plan de symétrie de celle-ci.

L'ouverture des fourches terminant la chape correspond d'une part au diamètre des bossages dans lesquels sont montés les axes de molettes et d'autre part à la dimension sur plats des écrous d'assemblage et de serrage des arcades.

La chape du levier a une profondeur et un écartement suffisants pour permettre le passage des organes d'assemblage des arcades.

Le coupe-tubes selon l'invention présente en outre les caractéristiques telles que décrites dans les revendications 2 à 9.

D'autres caractéristiques et avantages apparaîtront dans la description qui va suivre d'un coupe-tubes réalisé selon l'invention donné à titre d'exemple non limitatif en regard des dessins annexés sur lesquels :

La figure 1 représente une vue de face en demi-coupe du coupe-tubes équipé de son levier.

La figure 2 représente une vue partielle en coupe du dispositif d'entraînement en rotation du coupe-tubes. La figure 3 est une vue en coupe qui représente le détail d'une des deux fourches du levier en position d'entraînement.

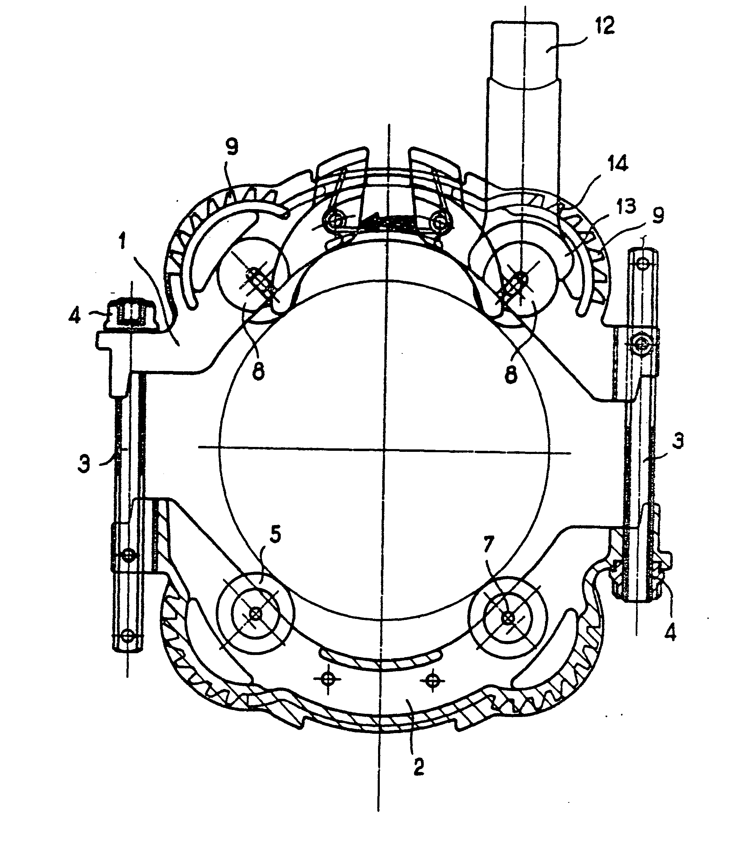

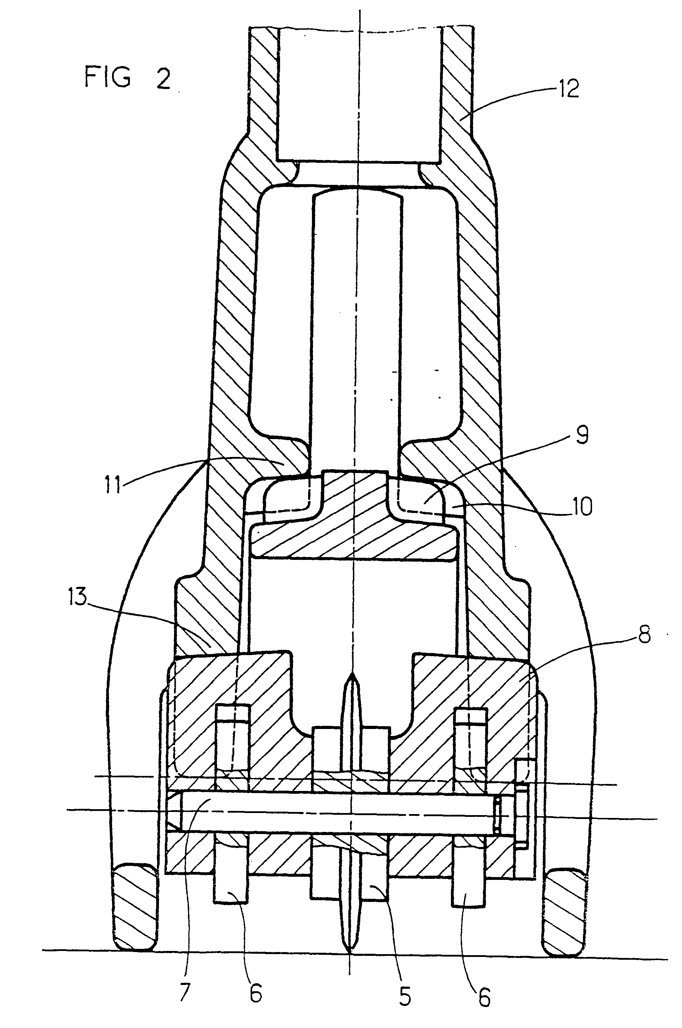

En se reportant aux figures 1 et 2 on remarque que le coupe-tubes est constitué des arcades 1 et 2 assemblées par les tirants 3 et les écrous 4, sur lesquelles sont montées les molettes 5 et les rouleaux 6 par l'intermédiaire des axes 7 fixés dans des orifices percés dans les bossages 8, à la périphérie desquelles sont disposés les secteurs à rochet 9 sur lesquels viennent s'engager les cliquets d'entraînement 10 disposés à l'intérieur de la chape 11 du levier 12. L'extrémité de la chape 11 est munie de fourches 13 qui viennent s'encastrer dans les bossages 8.

Comme on le voit en se reportant à nouveau aux figures 1 et 2 le coupe-tubes est entraîné à l'aide du levier 12 par l'intermédiaire de la chape 11, des cliquets 10, des secteurs à rochet 9 et des bossages 8. Il suffit tout d'abord de présenter les fourches 13 situées à l'extrémité de la chape 11 sur les bossages 8 et de réaliser l'encastrement des cliquets 10 sur deux secteurs à rochet 9, puis d'exercer un effort sur le levier, dans le sens antihoraire matérialisé par une flèche sur la figure 1, pour obtenir l'entraînement en rotation du coupe-tubes par engrènement des dents des cliquets 10 sur celles de deux secteurs à rochet 9.

Dans les dents des secteurs à rochet 9, les flancs 14 sur lesquels les deux cliquets 10 peuvent prendre appui sont des surfaces planes engendrées par des rayons issus du centre des bossages d'articulation 8.

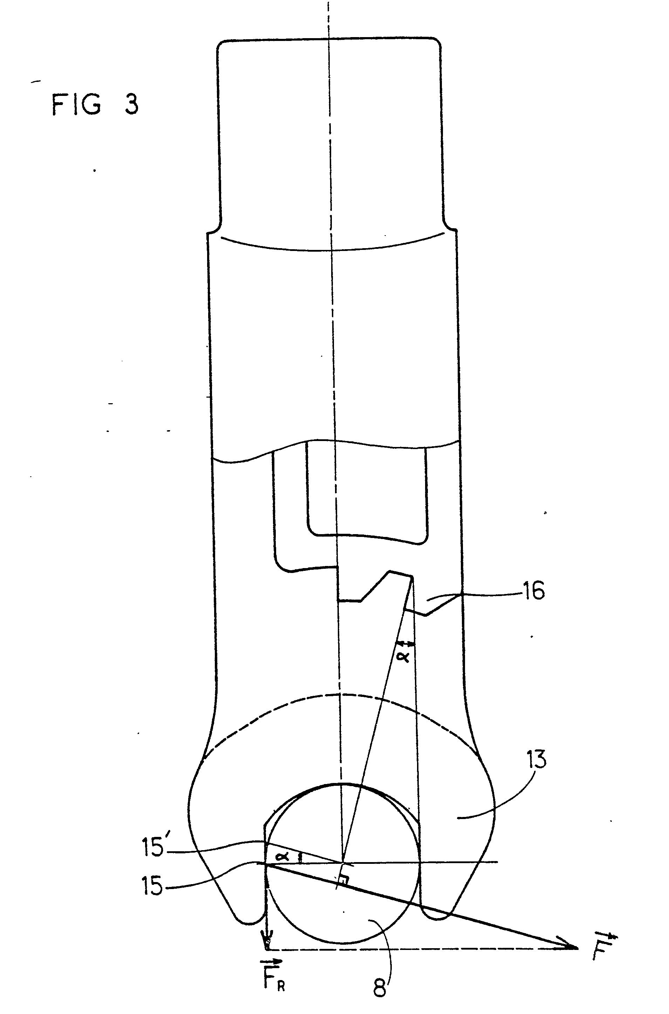

En se reportant à la figure 3 on voit que du fait du décalage angulaire α des fourches 13 avec les flancs de la première dent des cliquets 10, que le point de contact 15' des fourches 13 avec les bossages 8 se trouve décalé en 15 d'un même angle et comme l'effort transmis $\vec{F}$ par le levier 12 s'exerce en ce point 15 perpendiculairement au flanc de la dent du rochet 9 sur lequel prend appui la première dent 16 des cliquets 10, la projection dudit effort sur l'axe desdites fourches 13 met en évidence une force radiale $\vec{Fr}$ qui assure le maintien en place de la chape 11 pendant la rotation du coupe-tubes en forçant les fourches 13 à s'engager de plus en plus profondément sur les bossages 8, tandis que les dents des deux cliquets 10 s'engagent également de plus en plus profondément dans celles des secteurs à rochet 9.

La valeur angulaire des secteurs à rochet 9 et l'écart angulaire entre deux dents successives desdits secteurs à rochet ont été déterminés de façon à ce que l'on puisse changer la position du levier d'entraînement de 10 à 15° quelle que soit la position occupée par le coupe-tubes.

Entre deux changements de position du levier, le coupe-tubes tourne d'un angle qui dépend de sa position, mais dont la valeur moyenne sur un tour est égale au débattement angulaire dudit levier qui a une valeur constante choisie entre 10 et 15°.

Comme on le voit, il est possible d'obtenir un changement de position du levier de 10 à 15° ou d'un multiple de cet angle sur tout le pourtour du coupe-tubes.

Pour permettre le positionnement des fourches 13 et des cliquets 10 respectivement sur les bossages 8 et sur les secteurs à rochet 9 situés à proximité des écrous de liaison des arcades, la profondeur de la chape 11 ainsi que son écartement ont été déterminés pour laisser passer l'extrémité libre des tirants 3.

Le fait que les bossages 8 ont été choisis d'un diamètre égal à la dimension sur plats des écrous d'assemblage des arcades permet d'utiliser le levier à la fois pour entraîner le coupe-tubes et pour manoeuvrer à distance les écrous 4.

Comme on le voit ce coupe-tubes peut être mis en œuvre avec des changements de position du levier fonction du débattement autorisé dans chaque cas d'utilisation. Cet avantage est particulièrement appréciable en tranchée profonde et étroite et dans tous les endroits peu accessibles ; d'autant qu'il permet une application plus aisée et plus rationnelle de l'effort de coupe.

Le coupe-tubes selon l'invention peut être utilisé dans tous les cas où la coupe d'un tube doit être effectuée dans des endroits exigus ou encombrés ne permettant pas un grand débattement du levier d'entraînement ni une application aisée de l'effort de coupe. Il permet, par exemple, de couper un tube de diamètre nominal 300 mm dans une tranchée de 600 mm de largeur.

Des applications particulièrement intéressantes existent en génie civil, en travaux publics et en chauffage-plomberie pour la coupe des tubes en vue de construire ou de modifier des réseaux de distribution de fluide ; notamment les circuits d'eau.

## Revendications

1. Coupe-tubes à molettes (5) et à arcades (1, 2), caractérisé en ce que l'entraînement en rotation est effectué au moyen d'un levier (12) dont l'accrochage sur les arcades (1, 2) est assuré par l'engrènement de cliquets (10), prévus sur le levier, avec des rochets (9) disposés à la périphérie des arcades et par l'engrènement de fourches (13), prévues aux extrémités de la chape (11) du levier (12), avec des bossages (8) des arcades (1, 2) dans lesquelles sont montés les axes (7) des molettes (5).

2. Coupe-tubes selon la revendication 1, caractérisé en ce que les secteurs à rochet (9) sont disposés coaxialement à chacune des molettes (5).

3. Coupe-tubes selon la revendication 2, caractérisé en ce que les secteurs à rochet (9) sont réalisés en deux parties disposées de part et d'autre du plan de symétrie des arcades.

4. Coupe-tubes selon la revendication 1, caractérisé en ce que les cliquets (10) qui équipent la chape (11) du levier (12) sont réalisés en deux parties disposées à l'intérieur de ladite chape (11) de part et d'autre du plan de symétrie de celle-ci.

5. Coupe-tubes selon la revendication 1, caractérisé en ce que l'ouverture des fourches (13) terminant la chape (11) correspond d'une part au diamètre des bossages (8) dans lesquels sont montés les axes de molettes et d'autre part à la dimension sur plats des écrous (4) d'assemblage et de serrage des arcades.

6. Coupe-tubes selon la revendication 1, caractérisé en ce que la chape (11) du levier (12) a une profondeur et un écartement suffisants pour permettre le passage des organes d'assemblage des arcades.

7. Coupe-tubes selon la revendication 1 ou 5, caractérisé en ce que l'ensemble des deux fourches (13) terminant la chape (11) du levier (12) est décalé angulairement par rapport aux flancs de la première dent des cliquets (10) de façon à obliger lesdites fourches à s'engager de plus en plus profondément sur les bossages (8) tandis que les dents des deux cliquets (10) s'engagent également de plus en plus profondément dans celles des secteurs à rochet (9) lorsqu'un couple d'entraînement est appliqué sur le levier (12).

8. Coupe-tubes selon la revendication 1 ou 5, caractérisé en ce que les bossages (8) sont excentrés vers la périphérie des arcades par rapport aux axes des molettes.

9. Coupe-tubes selon la revendication 1, caractérisé en ce que la valeur angulaire des secteurs à rochet (9) et l'écart angulaire existant entre deux dents successives desdits secteurs à rochet permet d'obtenir un changement de position angulaire du levier d'entraînement (12) de 10 à 15° ou d'un multiple de cet angle sur tout le pourtour du coupe-tubes.

## Claims

1. Pipe-cutter with cutter wheels (5) and yokes (1, 2) characterized in that the driving in rotation is obtained by means of a lever (12) hooked on yokes (1, 2) through the gearing of driving catches (10) provided on the lever, with ratchets (9) arranged at the periphery of the yokes and by the gearing of forks (13) provided at the forked ends (11) of lever (12), with bosses (8) of yokes (1, 2) in which the axles (7) of cutter wheels (5) are mounted.

2. Pipe-cutter as claimed in claim 1, characterized in that the ratchet sectors (9) are arranged coaxially with each of the cutter wheels (5).

3. Pipe-cutter as claimed in claim 2, characterized in that the ratchet sectors (9) are made in two parts arranged on either side of the plane of symmetry of the yokes.

4. Pipe-cutter as claimed in claim 1, characterized in that the catches (10) equipping the forked end (11) of the lever (12) are made in two parts arranged inside the said forked end (11) on either side of the plane of symmetry ot the latter.

5. Pipe-cutter as claimed in claim 1, characterized in that the opening of the forks (13) terminating the forked end (11) is of a diameter which corresponds, on the one hand, to the diameter of the bosses (8) in which the cutter wheel axles are mounted, and, on the other hand, to the size across flats of the nuts (4) for assembling and tightening the yokes.

6. Pipe-cutter as claimed in claim 1, characterized in that the forked end (11) of the lever (12) is of a depth and a gap which permits the passage of components of the yoke assemblies.

7. Pipe-cutter as claimed in claim 1 or 5, characterized in that the assembly of the two forks (13) terminating the forked end (11) of the lever (12) is offset angularly relative to the flanks of the first tooth of the catches (10) so as to force the said forks to engage more and more deeply on the bosses (8) whilst the teeth of the two catches (10) also engage more and more deeply in those of the ratchet sectors (9) when a driving torque is applied to the lever (12).

8. Pipe-cutter as claimed in claim 1, characterized in that the bosses (8) are eccentric toward the periphery of the yokes relative to the axes of the cutter wheels.

9. Pipe-cutter as claimed in claim 1, characterized in that the angular size of the ratchet sectors (9) and the angular separation between two successive teeth of the said ratchet sectors makes it possible to obtain a change in angular position of the driving lever (12) by 10 to 15° or by a multiple of this angle over the whole periphery of the pipe-cutter.

## Patentansprüche

1. Rohrschneider mit Schneidrädchen (5) und Bogenteilen (1, 2) dadurch gekennzeichnet, daß die Drehmitnahme mittels eines Hebels (12) bewirkt wird, dessen Ankuppeln an den Bogenteilen (1, 2) sichergestellt ist durch das Ineinandergreifen von am Hebel vorgesehenen Riegeln (10) mit an der Oberfläche der Bogenteile angeordneten Sperren (9), und durch Ineinandergreifen der an den Enden des Mantels (11) des Hebels (12) vorgesehen Gabeln (13), mit Vorsprüngen (8) der Bögen (1, 2), an denen die Axen (7) der Schneidrädchen (5) befestigt sind.

2. Rohrschneider nach Anspruch 1, dadurch gekennzeichnet, daß die die Sperren (9) aufweiseneden Sektoren koaxial zu jedem der Schneidrädchen (5) angeordnet sind.

3. Rohrschneider nach Anspruch 2, dadurch gekennzeichnet, daß die Sperren (9) aufweisenden Sektoren (9) aus zwei Teilen aufgebaut sind, und zwar angeordnet beiderseits der Symmetrieebene der Bogenteile.

4. Rohrschneider nach Anspruch 1 dadurch gekennzeichnet, daß die den Mantel (11) des Hebels (12) ausrüstenden Riegel (10) aus zwei Teilen angeordnet im inneren des Mantels (11) aufgebaut sind und zwar beiderseits zu dessen Symetrieebene.

5. Rohrschneider nach Anspruch 1 dadurch gekennzeichnet, daß die den Mantel (11) abschließende Öffnung der Gabeln (13), einerseits dem Durchmesser der Vorsprünge (8), an denen die Axen der Schneidrädchen befestigt sind, und andererseits der Abmessung der Schraubteller (4) entspricht, welch letztere zum Zusammenbau und zum festziehen der Bögen dienen.

6. Rohrschneider nach Anspruch 1 dadurch gekennzeichnet, daß der Mantel (11) des Hebels (12) eine Vertiefung und einen Spalt, hinreichend zum Durchlassen der Organe zum Zusammenfügen der Bogenteile besitzt.

7. Rohrschneider nach Anspruch 1 oder 5 dadurch gekennzeichnet, daß die Anordnung der zwei Gabeln (13), die den Mantel (11) des Hebels (12) abschließen, winkelmäßig bezüglich der Flanken des ersten Zahns der Sperriegel (10) in der Art und Weise verstellbar ist, daß die Gabeln tiefer und tiefer auf den Vorsprüngen (8) in Eingriff kommen, während die Zähne der zwei Riegel (10) gleichfalls tiefer und tiefer mit denen der Sperren (9) aufweisenden Sektoren in Eingriff kommen, und zwar dann wenn ein Mitnahmedrehmoment an den Hebel (12) angelegt wird.

8. Rohrschneider nach Anspruch 1 oder 5 dadurch gekennzeichnet, daß die Vorsprünge (8) in Richtung auf die Peripherie der Bogenteile in Beziehung zu den Axen der Schneidrädchen exzentrisch sind.

9. Rohrschneider nach Anspruch 1 dadurch gekennzeichnet, daß die Winkelgröße der die

Sperren (9) aufweisenden Sektoren und der Spaltwinkel, der zwischen zwei aufeinanderfolgenden Zähnen der die Sperren aufweisenden Sektoren besteht, ein Ändern der Winkelstellung des Mitnahmehebels (12) um 10 bis 15 Grad oder um ein Mehrfaches dieses Winkels auf dem gesamten Umfang des Rohrschneiders gestattet.

FIG 2

FIG 3